# EUROPEAN PATENT SPECIFICATION

(11) **EP 4 431 053 B1**
(45) Date of publication and mention of the grant of the patent: **12.11.2025**
(21) Application number: 23382236.0
(22) Date of filing: 14.03.2023
(51) Int. Cl.: A61C 8/00, A61C 9/00

(54) **SCANNING DEVICE AND SCANNING ASSEMBLY**
SCANVORRICHTUNG UND SCANANORDNUNG
APPAREIL DE SCAN ET ENSEMBLE POUR SCANNER

(43) Date of publication of application: 18.09.2024
(73) Proprietor: Tech Xika P.T.T, S.L.U., 25005 Lleida (ES)
(72) Inventor: Carrero, Xavier, 25005 Lleida (ES); Sassi, Sebastian, 25005 Lleida (ES)
(74) Representative: Carlos Hernando, Borja

(56) References cited:
- AT-U2- 15 364
- CN-U- 213 190 255
- US-B1- 9 788 919

## Description

### OBJECT OF THE INVENTION

The present invention, an intraoral scanning device, relates to a intraoral scanning device, or scanbody, for digitally recording the position of a dental implant by means of a scanner. Scanning devices of this type, in the form of an abutment or body, is used to virtually transfer the position and orientation of a dental implant or a similar element such as a transepithelial abutment, for example, to CAD software. To that end, the scanning device is preferably arranged directly over a dental implant or a transepithelial abutment located in the patient's mouth in clinic setting and subsequently scanning it with an intraoral scanner. Alternatively, it is possible to use the device object of the invention in the laboratory and use a conventional desktop scanner.

In particular, the intraoral scanning device object of the present invention, or scanbody, is particularly applicable in edentulous patients, and comprises a main body that is coupled, preferably by means of threading, on a dental implant or a similar element, i.e., a transepithelial abutment, said main body comprising at least one coupling means arranged on its outer surface to receive least one secondary body or element. The invention also relates to a scanning assembly.

The device object of the present invention is applicable in the sector of dental implantology.

### BACKGROUND OF THE INVENTION

Scanning technique is customary in dental prosthesis manufacturing processes in implantology applications. In the state of the art, there are mainly two ways of applying said scanning technique.

The first older and more widely used technique consists of scanning a reproduction, in material similar to plaster, of the patient's jaw, where the implants existing in the patient's jaw have been replaced with replicas thereof placed in the mentioned reproduction. Specific scanning abutments designed to be scanned are fixed on these replicas.

The second more recent technique consists of placing scanning abutments directly on the implant anchored in the patient's jaw to subsequently perform intraoral scanning.

In both cases, the result obtained from the scan serves as the basis for the design and manufacture of dental prostheses.

In that sense, the first technique of taking impressions by means of resin has been the customary practice for gathering information about the patient's mouth. A tray with the shape and dimensions of a mouth arch is filled with this resin and said tray is inserted into the mouth, over the arch, completely covering it. Once the resin has solidified in the mouth for a few minutes, the final impression is extracted. In the event that this first technique is to be used in mouths in which there are implants, impression is started by placing impression abutments on the implants and customizing the impression tray so that said abutments can go through the tray and do not hit against it. Resin is then added around the implants, the tray is filled with material and placed over the working arch, allowing the resin to fill all voids in the impression. Finally, the impression abutments are unscrewed and the information is sent to the laboratory. With the information obtained, the laboratory proceeds to manufacture plaster models, developing the previous impression and reproducing the patient's mouth.

Unlike the first technique, the second technique does not require manufacturing a plaster model of the mouth. To do this, one or more scanning abutments are placed in the mouth and a digital reading is performed with an intraoral scanner, generating a file with all the information about the patient's mouth that is sent digitally to a laboratory. The scanner performs a reading of the surfaces of the abutment or scanbody which, being fixed in a single position to the dental implant or a similar element, provides information regarding the location and orientation of said implant or element. The laboratory, with the information obtained, develops the design of the final prosthesis. A plethora of scanning abutments with different properties and characteristics are known in the state of the art as described, for example, in the specification of document ES2583904A1 which refers to a dental scanning abutment and a method for the assembly and fixing thereof to a dental implant or a replica thereof. Likewise, document WO2018/220248A1 describes a method for designing a dental prosthesis by means of digital techniques based on scanning.

The foregoing are two different methods to obtain a final prosthesis, a first method or technique that uses a desktop scanner over the plaster mouth model, and the second method or technique that uses an intraoral scanner. In both cases, errors may be generated in the different information transmission steps.

In particular, in the first method, once the plaster mouth models have been created, they are scanned with a desktop scanner. Although this process is considered to have a satisfactory precision, it must be taken into account that this process with plaster models may include errors originating from the material with which the impression is made, mainly resin or silicone, such as:
- deformations during impression taking,
- deformations during transport from the clinic to the laboratory of the impression model,
- deformations in the manufacture of the plaster model after the impression has arrived at the laboratory due to shrinkage during setting that may vary depending on the proportions of plaster and water used.

Although the second method or technique does not involve any step of transmitting information to the plaster model and possible errors derived from said step are avoided, leading to this second method being more adapted to real information, the complete surety that there is no transmission of errors, for example, derived from the intraoral scanning itself, cannot be ensured.

Errors derived from the two preceding methods or techniques are especially relevant in completely or partially edentulous patients, in particular the use of the first technique in such patients is particularly complicated since, due to the anatomical characteristics of these patients, such as bone defects, hypomobile soft tissue, the presence of saliva throughout the mucosa of the oral cavity, for example, the veracity and precision of the impressions can be altered, thus making it difficult to transmit information from the clinic to the laboratory. Likewise, the second technique is not recommended for completely or partially edentulous cases given that, since there are no reference points in the patient's mouth, there is a loss of information regarding the position, making this technique unfeasible.

Relevant prior art is also exemplified by CN 213 190 255 U, AT 15 364 U2, and US 9 788 919 B1.

The object of the present invention is to solve the preceding problems in order to enable performing a more accurate reading and transmission of information in those cases of completely or partially edentulous mouths.

### DESCRIPTION OF THE INVENTION

The object of the present invention relates to a scanning device according to claim 1, and a scanning assembly according to claim 15. . Additional features of the invention are set forth in the dependent claims.

Specifically, the scanning device object of the present invention is a device or scan abutment (scanbody) of the type that can be coupled to a dental implant or a similar element, for example, a transepithelial abutment, previously arranged in the patient's mouth, comprising a main body with a through opening along a first axis of said body and an outer surface extending between a first base and a second base. Through this second base, the main body is connected to the dental implant or the similar element, said main body comprising at least two primary coupling means accessible from said outer surface. Preferably, the primary coupling means extends along a third axis preferably perpendicular to the first axis of the main body. The main body has, mainly, a mostly cylindrical body, although other geometric shapes cannot be ruled out. Likewise, the material of said main body is preferably biocompatible. In the second base, the main body has a geometry that is complementary to the type of implant or similar element to which it will be connected.

The scanning device thus has a main body or scanning abutment which can be rotary or non-rotary, and is connected to the implants or the like such as a transepithelial element located in the patient's mouth, for example. Said connection is preferably made by means of a screw that is inserted into the through hole of the main body, the head of which rests on a seat arranged inside said through hole. Said screw protrudes through the second base of the main body in order to be able to be attached, by means of threading, to the implant or similar element.

The device further comprises at least one secondary element or pin with a secondary body that extends along a second axis, having, at at least one of the two ends of said secondary body, a secondary coupling means complementary to the primary coupling means of the main body. These pins or secondary elements with a secondary body coupled to the outer surface of the main body serve as aids when performing digital reading and so information regarding the location of the implants in the patient's mouth is not lost. The material of said secondary body is preferably biocompatible.

The main body provides the orthogonal position (x, y, z) of the dental implant or similar element and the at least one secondary element coupled to said main body provides additional reference points for tracking the digital reading between the main scanbodies arranged on the implants or similar elements of the completely or partially edentulous user. In this way, by means of using as many secondary scanning elements as necessary, it will be possible to perform a real reading of all the implants or similar elements, such as transepithelial abutments, in order to obtain a record that best reflects the actual positioning of the implants or transepithelial abutments, for the purpose of reproducing the structure with the greatest precision possible after it has been placed in the mouth of a preferably edentulous patient.

Both the main body and the secondary body or bodies are made of a scannable material.

Preferably, the primary coupling means and the secondary coupling means form a threading system, wherein the primary coupling means can be a threaded hole or a threaded cylinder, and then the secondary coupling means will be a threaded cylinder or a threaded hole, respectively, with the threaded hole and the threaded cylinder obviously being complementary for screwing one into the other. Alternatively, the coupling means could be made by fitting, i.e., a hole and a protrusion which is inserted into said hole with a certain amount of tightness. It is possible to use other coupling means between both bodies if the position between both is guaranteed.

As set forth above, the primary coupling means is preferably a threaded hole along the third axis which is preferably perpendicular to the first axis of the main body. In that sense, the secondary coupling means is a threaded cylinder that extends along the second axis of the secondary body intended to be screwed into the threaded hole, such that the second axis of the secondary body will be perpendicular to the first axis of the main body after the coupling between both bodies.

Alternatively, the primary coupling means is a threaded cylinder along the third axis, perpendicular to the first axis of the main body. With this construction of the primary coupling means, the secondary coupling means is a threaded hole along the second axis in the secondary body. Said hole as secondary coupling means is intended to receive the threaded cylinder of the main body, such that the second axis of the secondary body will preferably be perpendicular to the first axis of the main body after the coupling between both bodies.

Preferably, the at least one primary coupling means is arranged closer to the first base of the main body than to the second base. Preferably, said primary coupling means is located between the first base of the main body and the seat of the head of the screw for connection with the implant or similar element.

The length of the main body, between the first base and the second base, may vary depending on patient's needs, preferably varying between 3 mm and 15 mm. Its width may also vary, preferably between 3 mm and 10 mm. The number of primary coupling means on the outer surface of the main body may vary between preferably at least one and eight. If there are two or more of said primary coupling means, they can be arranged in different ways around the outer surface, preferably being arranged in an equidistant manner with respect to one another and preferably all at the same distance from the first base of the main body. In the case of having 6 primary coupling means, the third axes thereof would be located at 60° with respect to one another.

Alternatively, said primary coupling means may not be located in an equidistant manner with respect to one another. For example, in an example with three primary coupling elements, two of them can be arranged at 60° with respect to one another and the third primary coupling element at 150° from each of the preceding two. In another alternative with two primary coupling means, they are located at 120° with respect to one another.

Depending on the patient's mouth to be digitized and on the number of existing implants, different types of main body coupled on the implant or the like may be used. Likewise, the secondary elements or pins can have different lengths between their two ends, varying for example between 2 and 50 mm. The length of the secondary body of said pins will be determined by the distance existing between the main bodies.

Another object of the invention relates to an intraoral scanning assembly comprising, according to the preceding description, at least one main body with at least two primary coupling means and at least one secondary body or pin with a secondary coupling means coupled in the primary coupling means of the main body.

### BRIEF DESCRIPTION OF THE DRAWINGS

In order to complete the description of the present invention and facilitate the understanding of its features, an illustrative and non-limiting set of figures with at least one embodiment of the invention is included.
Figure 1 shows a perspective view of an example of the main scanning device or abutment, with a main body, object of the invention with three coupling means, formed by holes on the outer surface thereof, with two horizontally positioned secondary bodies, elements, or pins, coupled or fixed in two of said holes on the main scanning abutment.
Figure 2 shows a front view and a sectional view of the main scanning abutment with a screw arranged inside the abutment for fixing thereof to the dental implant or transepithelial element.
Figure 3 shows a perspective view, a partially sectioned front view, and a sectioned plan view, of an example of a main scanning abutment, with six holes for the coupling of horizontally positioned secondary pins.
Figure 4 shows a perspective view, a partially sectioned front view, and a sectioned plan view, of an example of a main scanning abutment, with three holes for the coupling of horizontally positioned secondary pins.
Figure 5 shows a perspective view, a partially sectioned front view, and a sectioned plan view, of an example of a main scanning abutment, with two holes for the coupling of horizontally positioned secondary pins.
Figure 6 shows a front view of three alternative horizontally positioned secondary elements or pins, with different lengths.
Figure 7 shows a plan view of a mouth model on which the main scanning abutments and the horizontally positioned pins have been positioned.
Figure 8 shows a representation of a mouth and the entire assembly of the scanning abutments and positioned pins for digital reading.
Figure 9 shows a view of the main scanning abutments and horizontally positioned pins.

### PREFERRED EMBODIMENT OF THE INVENTION

Several preferred embodiments of the invention are described below in accordance with the preceding figures.

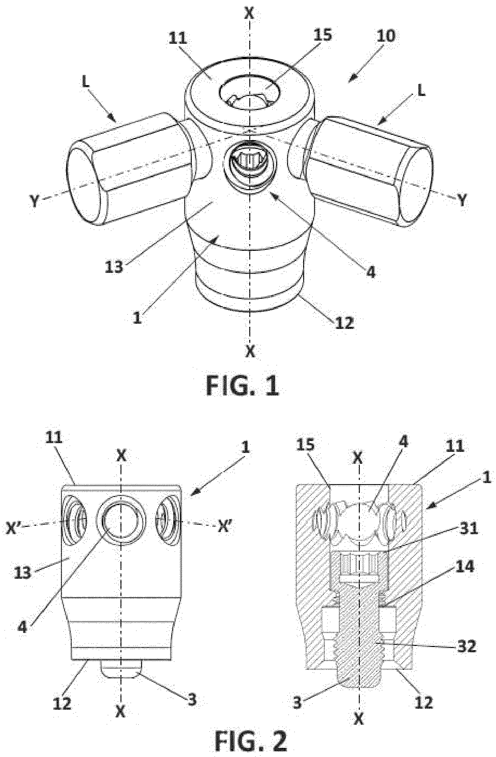

Figure 1 shows a first embodiment of the device of the invention in which a scanning abutment formed by a main body 1 with a central through hole or opening 15 is observed. Said main body 1 has a first base 11 and a second base 12 opposite the first base. The main body 1 is preferably a body of revolution about a first axis x, and with a cylindrical cross-section and therefore with a circular outer surface 13. The through hole or opening 15 is coaxial with the first axis x. The end close to the second base 12 has a shape complementary to the shape of the implant on which the main body 1 is to be connected.

The preferred dimensions of said main body 1 are a length between bases of between 3 mm and 15 mm. Likewise, the diameter or distance between the sides of the outer surface, preferably the diameter in the case of having a circular section, can preferably be between 3 and 10 mm.

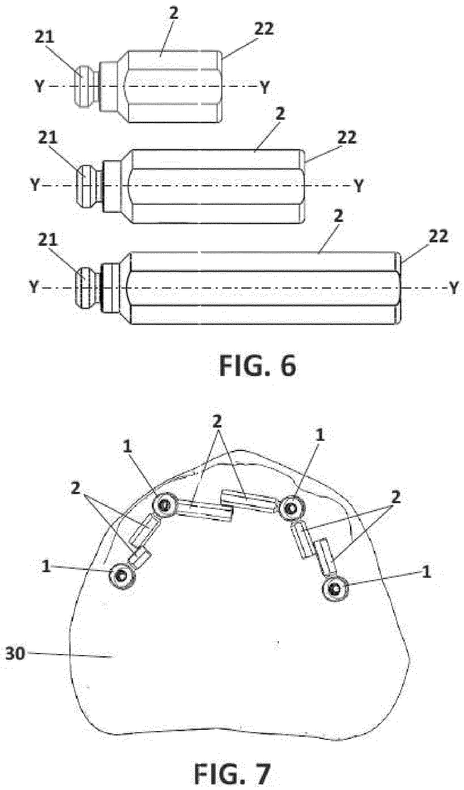

Said main body 1 has two secondary elements, pins, or second bodies 2, coupled thereto. Specifically, they are coupled to first coupling means 4 accessible through the outer surface 13 of the main body 1 that extend along a third axis x'. The secondary bodies 2 extend along a second axis y and have a first end 21 and a second end 22. Likewise, the main body 1 has another primary coupling means 4 without any second body 2, i.e., empty, also along a third axis x', also preferably perpendicular to the first axis x. Each secondary body 2 (see Figure 6) has at its first end 21 secondary coupling means complementary to the primary coupling means 4. Specifically, in the attached figures, a hole 4 is shown as the primary coupling means and a protrusion 21 as a secondary coupling means, such that to achieve the coupling, the protrusion 21 is inserted into the hole 4, and they fit together, by means of screwing, although the coupling could also be carried out with pressure, or according to another alternative coupling means. These coupling means could be inverted, such that the protrusion would be arranged in the main body 1 and the hole in the secondary body 2 (not shown). The third axis x' of the hole 4 of the main body 1 coincides with the second axis (y) of the second body or pin. The primary and secondary coupling means can vary depending on needs, incorporating, for example, threads in the holes and protrusions, which can be arranged interchangeably in the main body 1 or in the secondary body 2. Likewise, in the case of coupling by pressure or fitting, the hole and the protrusion can be located in the main body or in the secondary body, respectively.

The example of Figure 1 shows a scanning assembly 10 with a device formed, for example, by a main scanbody 11 with two secondary bodies or pins 2 located horizontally with respect to the first axis x of the main body 1. The main body 1 and the secondary bodies are made of a biocompatible material and are scannable. Other scanning assemblies according to the present invention are possible, with said assemblies having a main body 1 with at least one primary coupling means 4 and at least one secondary body or pin with a secondary coupling means 2 coupled in the coupling means primary 4 of the main body 1.

The main body 1 can be connected to the dental implant or similar element, for example a transepithelial abutment already arranged on an implant. In addition to using complementary shapes between the main body 1 of the device and the abutment or similar element, the connection is made by means of a screw 3 inserted into the through hole or opening 15 of the main body 1 (Figure 2). Said screw 3 is inserted through the first base 11 of the main body 1 until the head of said screw 31 is supported on a seat 14 existing inside said through hole or opening 15 of the main body 1, such that the end 32 of the screw 3 opposite to the head 31 projects beyond the second base 12.

As mentioned, the lengths of the main bodies 1 of the device 10, between the first base 11 and the second base 12, may vary depending on the patient's needs and requirements. The same occurs with the length between the two ends 21, 22 of the second body 2, which may vary between 2 mm and 50 mm depending on the needs (Figure 6).

The main body 1 can incorporate a different number of primary coupling means 4, which will preferably be holes. It can incorporate between a single primary coupling means 4 up to eight primary coupling means 4. Said primary coupling means are arranged on the outer surface, preferably at the same distance from the upper base 11 and in particular between the first base 11 and the seat 14 of the head 31 of the screw 3.

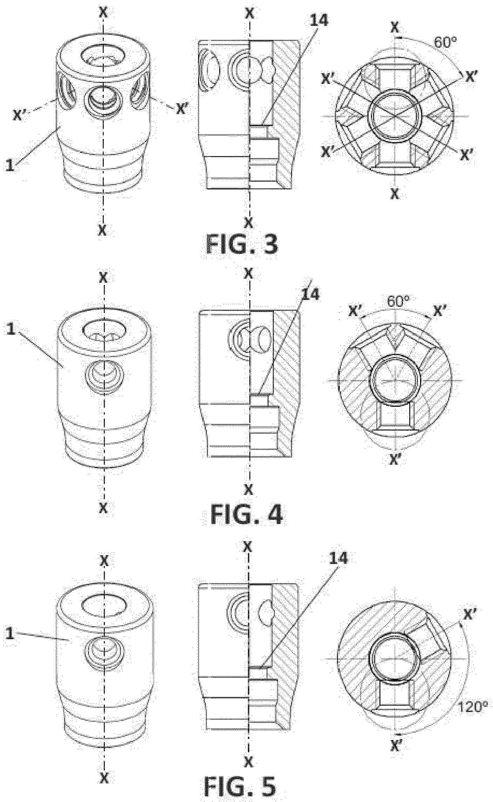

Figure 3 shows a main body with six holes as primary coupling means 4, arranged in an equidistant manner with respect to one another, specifically at 60° between the third axes x' of the holes 4. Figure 4 shows a main body 1 with three holes, with two holes 4 being arranged at 60° between their third axes x' and with the third axis x' of the third hole being arranged at 120° from the preceding ones. Figure 5 shows a main body 1 with two holes 4 with an angle of 120° between the third axes x' of each hole 4.

**All** of the above third axes x' are preferably perpendicular to the first axis x of the main body 1, such that they will also receive the second elements 2 in a perpendicular manner.

The purpose of the second pins or bodies 2 is to keep the scanning continuous and to prevent reference losses during the scanning process, in such a way that a continuous scanning of one main scanning body 1 to the subsequent main scanning body 1 is achieved as a result of the secondary pins or bodies 2 fixed horizontally to said main bodies 1, where as many secondary elements or pins 2 as necessary can be used, particularly in edentulous mouths that have few reference points that can be used as a guide.

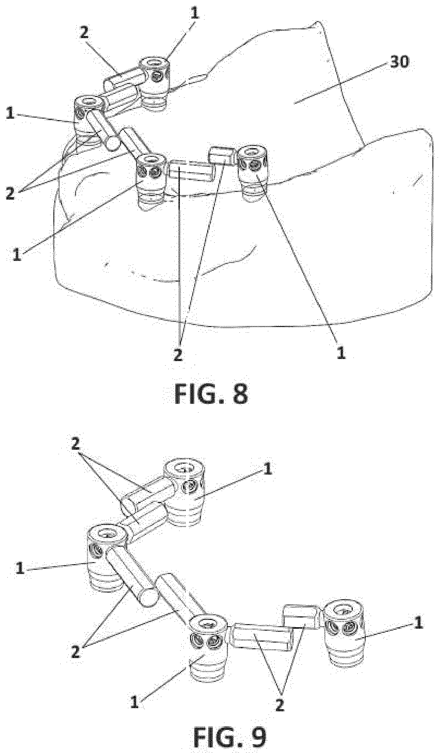

Figure 7 and figure 8 show how the scanning device object of the invention is located, with the main bodies 1 and the secondary bodies or pins 2, on a representation of part of a mouth. By means of using the secondary bodies or pins 2, the length of each one will be determined depending on the need to be able to approach each other laterally. Next, after placing the scanning devices object of the invention in the patient's mouth, digital reading will be performed by means of scanning in order to obtain precise information about the position of the implants or similar elements, such as transepithelial elements.

Figure 9 shows a positioning of the main bodies 1 creating a continuous positioning line for the set of implants, which allow a very clear reading of the positioning of the implants, similar or transepithelial elements, depending on the case, and without losing any reference point, finally obtaining a final prosthesis structure with a perfect passive fit.

## Claims

1. A scanning device, of the type that can be coupled to a dental implant or similar element, comprising a main body (1) with a through opening along a first axis (x) of the body and an outer surface that extends between a first base and a second base, through which it is connected to the dental implant, **characterized in that** it said outer surface comprises at least two primary coupling means (4) for receiving a secondary element (2) with secondary coupling means (5) that are complementary to the primary coupling means (4).

2. The device according to claim 1, **characterized in that** it comprises at least one secondary element or pin (2) with a secondary body (2) that extends along a second axis (y), having, at least one of the two ends of said secondary body (2), secondary coupling means (5).

3. The device according to claim 1, **characterized in that** the primary coupling means (4) extend along a third axis (x').

4. The device according to any of the preceding claims, **characterized in that** the first axis (x) and the third axis (x') are perpendicular.

5. The device according to any of the preceding claims, **characterized in that** the primary coupling means (4) and the secondary coupling means form a threading system.

6. The device according to claim 5, **characterized in that** the primary coupling means is a threaded hole (4) along the third axis (x').

7. The device according to claim 6, **characterized in that** the secondary coupling means is a threaded cylinder that extends along the second axis (y) of the secondary body (2) intended to be screwed into the threaded hole (4) of the first body (1).

8. The device according to claim 5, **characterized in that** the primary coupling means is a threaded cylinder along the third axis (x').

9. The device according to claim 7, **characterized in that** the secondary coupling means is a threaded hole along the second axis (y) in the secondary body (2), intended to receive the threaded cylinder of the main body (1).

10. The device according to any of claims 1 to 4, **characterized in that** the primary coupling means (4) and the secondary coupling means form a pressure system.

11. The device according to claim 10, **characterized in that** the primary coupling means is a hole or a protrusion and the secondary coupling means is a protrusion or a hole, respectively.

12. The device according to any of the preceding claims, **characterized in that** the through hole of the main body (1) has a seat (14) therein to receive the head of a screw (3) projecting from the second base of the main body (1) for the attachment of said body with the implant or similar element.

13. The device according to any of the preceding claims, **characterized in that** it comprises up to eight primary coupling means arranged on its outer surface.

14. The device according to any of the preceding claims, **characterized in that** the main body (1) is rotary or non-rotary.

15. A scanning assembly, of the type that can be coupled to a dental implant or similar element, **characterized in that** it comprises at least one main body (1) according to claim 1, and at least one secondary body or pin (2), according to claim 2, coupled in the primary coupling means (4) of the main body (1).

## Patentansprüche

1. Scanningvorrichtung, des Typs, der mit einem Zahnimplantat oder einem ähnlichen Element gekoppelt werden kann, die einen Hauptkörper (1) umfasst, mit einer Durchgangsöffnung entlang einer ersten Achse (x) des Körpers und einer äußeren Oberfläche, die sich zwischen einer ersten Basis und einer zweiten Basis erstreckt, durch die sie mit dem Zahnimplantat verbunden ist, **dadurch gekennzeichnet, dass** die äußere Oberfläche mindestens zwei primäre Kopplungsmittel (4) zum Aufnehmen eines sekundären Elements (2) mit sekundären Kopplungsmitteln (5) umfasst, die zu den primären Kopplungsmitteln (4) komplementär sind.

2. Vorrichtung nach Anspruch 1, **dadurch gekennzeichnet, dass** sie mindestens ein sekundäres Element oder einen sekundären Stift (2) mit einem sekundären Körper (2) umfasst, der sich entlang einer zweiten Achse (y) erstreckt und an mindestens einem der beiden Enden des sekundären Körpers (2) sekundäre Kopplungsmittel (5) aufweist.

3. Vorrichtung nach Anspruch 1, **dadurch gekennzeichnet, dass** sich die primären Kopplungsmittel (4) entlang einer dritten Achse (x') erstrecken.

4. Vorrichtung nach einem der vorhergehenden Ansprüche, **dadurch gekennzeichnet, dass** die erste Achse (x) und die dritte Achse (x') senkrecht zueinander sind.

5. Vorrichtung nach einem der vorhergehenden Ansprüche, **dadurch gekennzeichnet, dass** das primäre Kopplungsmittel (4) und das sekundäre Kopplungsmittel ein Gewindesystem bilden.

6. Vorrichtung nach Anspruch 5, **dadurch gekennzeichnet, dass** das primäre Kopplungsmittel ein Gewindeloch (4) entlang der dritten Achse (x') ist.

7. Vorrichtung nach Anspruch 6, **dadurch gekennzeichnet, dass** das sekundäre Kopplungsmittel ein Gewindezylinder ist, der sich entlang der zweiten Achse (y) des sekundären Körpers (2) erstreckt, der in das Gewindeloch (4) des ersten Körpers (1) eingeschraubt werden soll.

8. Vorrichtung nach Anspruch 5, **dadurch gekennzeichnet, dass** das primäre Kopplungsmittel ein Gewindezylinder entlang der dritten Achse (x') ist.

9. Vorrichtung nach Anspruch 7, **dadurch gekennzeichnet, dass** das sekundäre Kopplungsmittel ein Gewindeloch entlang der zweiten Achse (y) im sekundären Körper (2) ist, das den Gewindezylinder des Hauptkörpers (1) aufnehmen soll.

10. Vorrichtung nach einem der Ansprüche 1 bis 4, **dadurch gekennzeichnet, dass** das primäre Kopplungsmittel (4) und das sekundäre Kopplungsmittel ein Drucksystem bilden.

11. Vorrichtung nach Anspruch 10, **dadurch gekennzeichnet, dass** das primäre Kopplungsmittel ein Loch oder ein Vorsprung ist und das sekundäre Kopplungsmittel jeweils ein Vorsprung oder ein Loch ist.

12. Vorrichtung nach einem der vorhergehenden Ansprüche, **dadurch gekennzeichnet, dass** das Durchgangsloch des Hauptkörpers (1) einen Sitz (14) darin aufweist, um den Kopf einer Schraube (3) aufzunehmen, die aus der zweiten Basis des Hauptkörpers (1) herausragt, um den Körper mit dem Implantat oder dem ähnlichen Element zu befestigen.

13. Vorrichtung nach einem der vorhergehenden Ansprüche, **dadurch gekennzeichnet, dass** sie bis zu acht primäre Kopplungsmittel umfasst, die an ihrer äußeren Oberfläche angeordnet sind.

14. Vorrichtung nach einem der vorhergehenden Ansprüche, **dadurch gekennzeichnet, dass** der Hauptkörper (1) drehbar oder nicht drehbar ist.

15. Scanninganordnung, des Typs, der mit einem Zahnimplantat oder einem ähnlichen Element gekoppelt werden kann, **dadurch gekennzeichnet, dass** sie mindestens einen Hauptkörper (1) nach Anspruch 1 und mindestens einen sekundären Körper oder Stift (2) nach Anspruch 2 umfasst, der in der primären Kopplungsmittel (4) des Hauptkörpers (1) gekoppelt ist.

## Revendications

1. Dispositif de balayage, du type qui peut être accouplé à un implant dentaire ou à un élément similaire, comprenant un corps principal (1) avec une ouverture de passage le long d'un premier axe (x) du corps et une surface externe qui s'étend entre une première base et une seconde base, à travers lequel il est relié à l'implant dentaire, **caractérisé en ce que** ladite surface externe comprend au moins deux moyens d'accouplement primaires (4) pour la réception d'un élément secondaire (2) avec des moyens d'accouplement secondaires (5) qui sont complémentaires des moyens d'accouplement primaires (4).

2. Dispositif selon la revendication 1, **caractérisé en ce qu'**il comprend au moins un élément secondaire ou goupille (2) avec un corps secondaire (2) qui s'étend le long d'un deuxième axe (y), ayant, au moins l'une des deux extrémités dudit corps secondaire (2), un moyen d'accouplement secondaire (5).

3. Dispositif selon la revendication 1, **caractérisé en ce que** les moyens d'accouplement primaires (4) s'étendent le long d'un troisième axe (x').

4. Dispositif selon l'une quelconque des revendications précédentes, **caractérisé en ce que** le premier axe (x) et le troisième axe (x') sont perpendiculaires.

5. Dispositif selon l'une quelconque des revendications précédentes, **caractérisé en ce que** le moyen d'accouplement primaire (4) et le moyen d'accouplement secondaire forment un système de filetage.

6. Dispositif selon la revendication 5, **caractérisé en ce que** le moyen d'accouplement primaire est un trou fileté (4) le long du troisième axe (x').

7. Dispositif selon la revendication 6, **caractérisé en ce que** le moyen d'accouplement secondaire est un cylindre fileté qui s'étend le long du deuxième axe (y) du corps secondaire (2) prévu pour être vissé dans le trou fileté (4) du premier corps (1).

8. Dispositif selon la revendication 5, **caractérisé en ce que** le moyen d'accouplement primaire est un cylindre fileté le long du troisième axe (x').

9. Dispositif selon la revendication 7, **caractérisé en ce que** le moyen d'accouplement secondaire est un trou fileté le long du deuxième axe (y) dans le corps secondaire (2), prévu pour recevoir le cylindre fileté du corps principal (1).

10. Dispositif selon l'une quelconque des revendications 1 à 4, **caractérisé en ce que** le moyen d'accouplement primaire (4) et le moyen d'accouplement secondaire forment un système de pression.

11. Dispositif selon la revendication 10, **caractérisé en ce que** le moyen d'accouplement primaire est un trou ou une protubérance et que le moyen d'accouplement secondaire est une protubérance ou un trou, respectivement.

12. Dispositif selon l'une quelconque des revendications précédentes, **caractérisé en ce que** le trou de passage du corps principal (1) a un siège (14) dans celui-ci pour recevoir la tête d'une vis (3) faisant saillie à partir de la seconde base du corps principal (1) pour la fixation dudit corps avec l'implant ou un élément similaire.

13. Dispositif selon l'une quelconque des revendications précédentes, **caractérisé en ce qu'**il comprend jusqu'à huit moyens d'accouplement primaires agencés sur sa surface externe.

14. Dispositif selon l'une quelconque des revendications précédentes, **caractérisé en ce que** le corps principal (1) est rotatif ou non rotatif.

15. Ensemble de balayage, du type qui peut être accouplé à un implant dentaire ou à un élément similaire, **caractérisé en ce qu'**il comprend au moins un corps principal (1) selon la revendication 1, et au moins un corps secondaire ou goupille (2), selon la revendication 2, accouplés dans le moyen d'accouplement primaire (4) du corps principal (1).
